# EUROPÄISCHE PATENTANMELDUNG

(11) **EP 3 498 142 A1**
(43) Veröffentlichungstag der Anmeldung: **19.06.2019**
(21) Anmeldenummer: 17207958.4
(22) Anmeldetag: 18.12.2017
(51) Int. Cl.: A47L 9/20, A47L 9/28, A47L 9/19

(54) **EFFIZIENTE FILTERABREINIGUNG**

(71) Anmelder: HILTI Aktiengesellschaft, 9494 Schaan (LI)
(72) Erfinder: Hanslmeier, Xaver, 87600 Kaufbeuren (DE); Müller, Svenja, 86316 Friedberg (DE)
(74) Vertreter: Hilti Aktiengesellschaft Corporate Intellectual Property

(57) **Zusammenfassung**

Verfahren zum Betreiben einer Staubsaugvorrichtung 1 mit einem Filterelement 6, einer Filterelementreinigungseinrichtung 7, eine Steuereinrichtung 14, eine Turbine 4, einen ersten 15 sowie zweiten Drucksensor 16, wobei der erste Drucksensor 15 zum Bestimmen eines ersten Druckwertes in Strömungsrichtung R vor dem Filterelement und der zweite Drucksensor 16 zum Bestimmen eines zweiten Druckwertes in Strömungsrichtung R hinter dem Filterelement positioniert ist,
Das Verfahren enthält die die Verfahrensschritte
- Betreiben der Staubsaugvorrichtung 1 zum Ansaugen des Luftstroms LS durch das Filterelement 6;
- Bestimmen eines ersten Druckreferenzwertes im Verhältnis von dem ersten zu dem zweiten Druckwert;
- Messen der Druckdifferenz zwischen dem ersten und zweiten Druckwert;
- Abreinigen des Filterelements 6 mit Hilfe der Filterelementreinigungseinrichtung 7, wenn der Wert der Druckdifferenz zwischen dem ersten und zweiten Druckwert einen ersten Schwellwert erreicht;
- Bestimmen eines zweiten Druckreferenzwertes im Verhältnis von dem ersten zu dem zweiten Druckwert nach Beendigung des Abreinigens des Filterelements 6;
- Bestimmen eines Differenzwertes zwischen dem zweiten und ersten Druckreferenzwert; und
- Abreinigen des Filterelements 6, wenn der Differenzwert zwischen dem zweiten und ersten Druckreferenzwert einen zweiten Schwellwert erreicht oder Abschalten der Staubsaugvorrichtung 1, wenn der Differenzwert zwischen dem zweiten und ersten Druckreferenzwert einen dritten Schwellwert erreicht.

## Beschreibung

Die vorliegende Erfindung betrifft eine Verfahren zum Betreiben einer Staubsaugvorrichtung, insbesondere eines Staubsaugers, mit einem Filterelement, einer Filterelementreinigungseinrichtung, eine Steuereinrichtung, eine Turbine zum Ansaugen eines Luftstroms durch das Filterelement, einen ersten Drucksensor sowie einen zweiten Drucksensor, wobei der erste Drucksensor zum Bestimmen eines ersten Druckwertes in Strömungsrichtung vor dem Filterelement und der zweite Drucksensor zum Bestimmen eines zweiten Druckwertes in Strömungsrichtung hinter dem Filterelement positioniert ist.

Darüber hinaus betrifft die Erfindung eine Staubsaugvorrichtung zur Durchführung des Verfahrens.

Staubsaugvorrichtungen mit einem Auffangbehälter, einem Filterelement, einer Filterelementreinigungseinrichtung, eine Steuereinrichtung, eine Turbine zum Ansaugen eines Luftstroms durch das Filterelement, einen ersten Drucksensor sowie einen zweiten Drucksensor sind weitestgehend durch den Stand der Technik bekannt. Das Filterelement dient dazu, Schmutzpartikel aus einem Luftstrom, der durch die Staubsaugvorrichtung angesaugt wird, herauszufiltern. Die beiden Drucksensoren vor und hinter dem Filterelement dienen zum Bestimmen einer Druckdifferenz, die Aufschluss über den Verschmutzungsgrad des Filterelements liefern kann. Je voller das Filterelement mit Schmutzpartikel aus dem angesaugten Luftstrom angefüllt ist, desto größer ist die Druckdifferenzwert zwischen den beiden Drucksensoren.

Der Auffangbehälter dient zum Sammeln von Schmutzpartikel, die aus dem angesaugten Luftstrom herausgefiltert werden, und die Turbine dient zum Erzeugen des angesaugten Luftstroms, mit dem Schmutzpartikel aufgesammelt werden. Das aus dem Stand der Technik bekannte Filterelement wird gewöhnlicher Weise in den angesaugten Luftstrom zwischen dem Auffangbehälter und der Turbine der Staubsaugvorrichtung angeordnet.

Filterelementreinigungseinrichtungen zum automatischen Abreinigen des Filterelements sind ebenfalls bereits durch den Stand der Technik weitestgehend bekannt. Hierbei kann mit Hilfe einer mechanischen Vorrichtung ein Schlagimpuls auf das Filterelement ausgeübt werden, wodurch die in dem Filterelement angesammelten Schmutzpartikel aus dem Filterelement heraus und in den Auffangbehälter gebracht werden.

Die durch den Stand der Technik bereits bekannten Verfahren zum automatischen Abreinigen des Filterelements in der Staubsaugvorrichtung sind zumeist wenig effektiv. Das automatische Detektieren des Verschmutzungsgrads des Filterelements und der daraus folgende Abreinigungsversuch führen selten zu einem genügend gereinigten Filterelement, mit dem der Saugvorgang in ausreichender Weise fortgesetzt werden kann.

Es ist daher Aufgabe der vorliegenden Erfindung ein Verfahren zum Betreiben einer Staubsaugvorrichtung sowie eine Staubsaugvorrichtung zur Durchführung des Verfahrens bereitzustellen, womit das vorstehend beschriebene Problem gelöst und eine effiziente Abreinigung des Filterelements erreicht werden kann.

Die Aufgabe wird durch den Gegenstand des unabhängigen Anspruchs 1 und 2 gelöst.

Die Aufgabe wird insbesondere gelöst durch ein Verfahren zum Betreiben einer Staubsaugvorrichtung, insbesondere eines Staubsaugers, mit einem Filterelement, einer Filterelementreinigungseinrichtung, eine Steuereinrichtung, eine Turbine zum Ansaugen eines Luftstroms durch das Filterelement, einen ersten Drucksensor sowie einen zweiten Drucksensor, wobei der erste Drucksensor zum Bestimmen eines ersten Druckwertes in Strömungsrichtung vor dem Filterelement und der zweite Drucksensor zum Bestimmen eines zweiten Druckwertes in Strömungsrichtung hinter dem Filterelement positioniert ist.

Erfindungsgemäß vorgesehen sind die Verfahrensschritte:
- Betreiben der Staubsaugvorrichtung zum Ansaugen des Luftstroms durch das Filterelement;
- Bestimmen eines ersten Druckreferenzwertes im Verhältnis von dem ersten Druckwert zu dem zweiten Druckwert;
- Messen der Druckdifferenz zwischen dem ersten und zweiten Druckwert;
- Abreinigen des Filterelements mit Hilfe der Filterelementreinigungseinrichtung, wenn der Wert der Druckdifferenz zwischen dem ersten und zweiten Druckwert einen ersten vorbestimmten Schwellwert erreicht;
- Bestimmen eines zweiten Druckreferenzwertes im Verhältnis von dem ersten Druckwert zu dem zweiten Druckwert nach Beendigung des Abreinigens des Filterelements;
- Bestimmen eines Differenzwertes zwischen dem zweiten Druckreferenzwert und dem ersten Druckreferenzwert; und
- Abreinigen des Filterelements mit Hilfe der Filterelementreinigungseinrichtung, wenn der Differenzwert zwischen dem zweiten Druckreferenzwert und dem ersten Druckreferenzwert einen zweiten vorbestimmten Schwellwert erreicht oder Abschalten der Staubsaugvorrichtung, wenn der Differenzwert zwischen dem zweiten Druckreferenzwert und dem ersten Druckreferenzwert einen dritten vorbestimmten Schwellwert erreicht. Hierdurch kann eine effiziente Abreinigung des Filterelements erreicht werden.

Des Weiteren wird die Aufgabe gelöst durch eine Staubsaugvorrichtung zur Durchführung des Verfahrens.

In den Figuren sind gleiche und gleichartige Komponenten mit gleichen Bezugszeichen beziffert. Es zeigen:

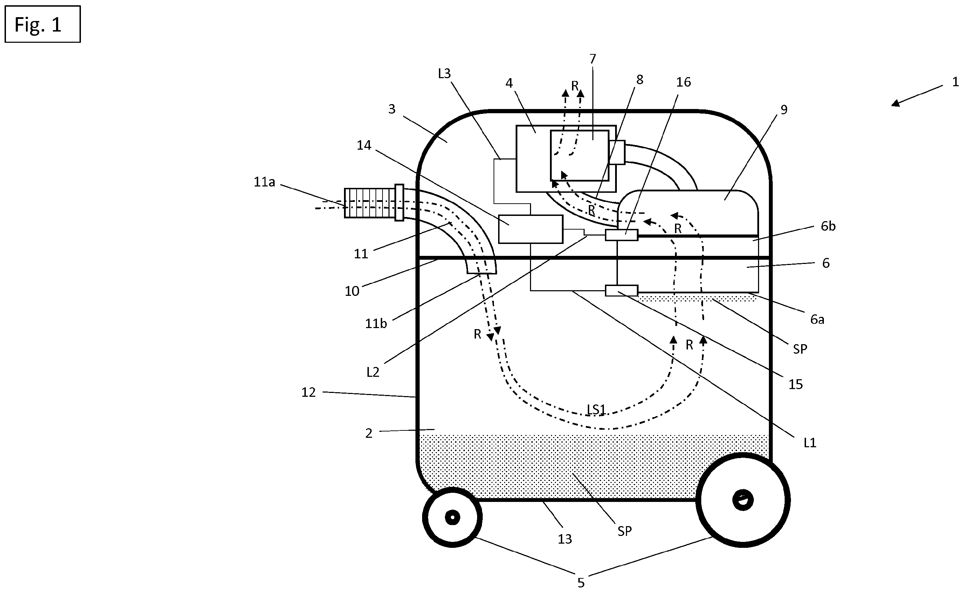

- Fig. 1: eine seitliche Schnittansicht auf eine erfindungsgemäße Staubsaugvorrichtung mit einem Auffangbehälter, einem Saugkopf mit einer Turbine und einem Filterelement, wobei ein durch die Turbine angesaugter Luftstrom durch das Filterelement angedeutet ist und wobei Schmutzpartikel aus dem Luftstrom herausgefiltert werden;

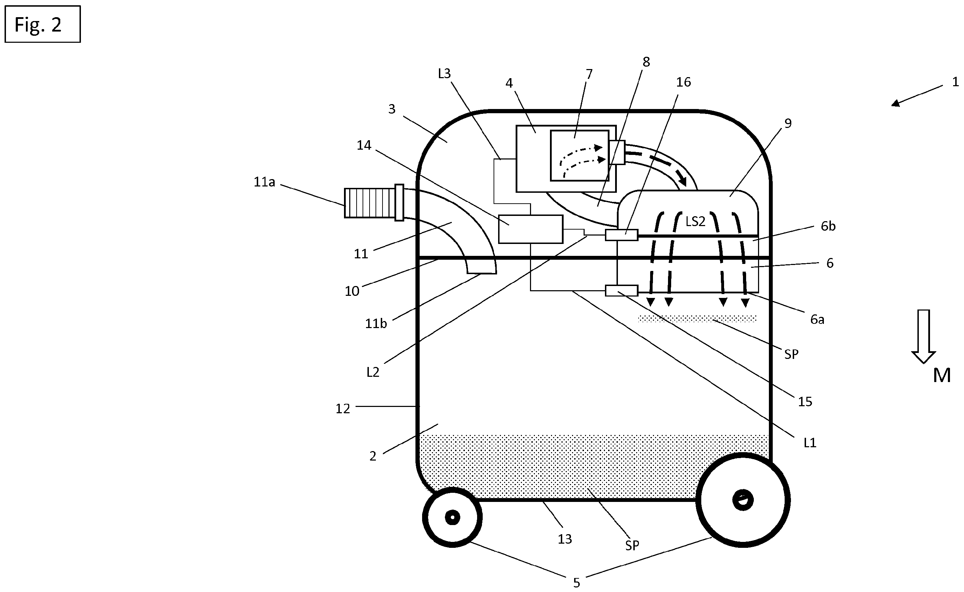

- Fig. 2: eine weitere seitliche Schnittansicht auf die erfindungsgemäße Staubsaugvorrichtung mit dem Auffangbehälter, dem Saugkopf mit der Turbine und einem Filterelement, wobei ein durch die Turbine erzeugter Luftstrom durch das Filterelement angedeutet ist, wodurch das Filterelement gereinigt wird, und

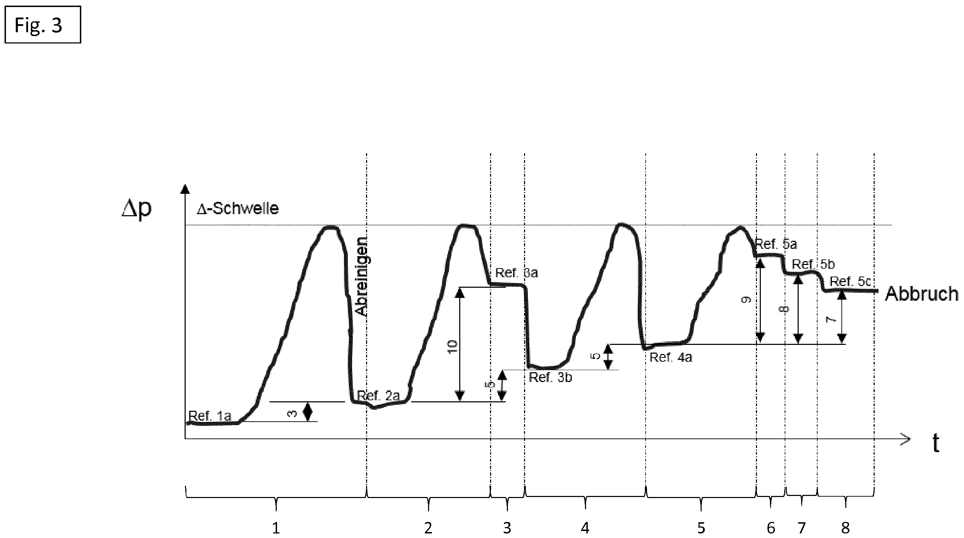

- Fig. 3: eine Grafik, die den Verlauf bzw. die Änderung der Druckverhältnisse zwischen einem ersten und zweiten Druckwert während eines Saugvorgangs zeigt.

### Ausführungsbeispiele:

Figur 1 zeigt eine beispielhafte Darstellung einer Staubsaugvorrichtung 1 in Form eines Staubsaugers.

Die Staubsaugvorrichtung 1 enthält im Wesentlichen einen Auffangbehälter 2 und einem Saugkopf 3. Der Saugkopf 3 ist lösbar auf dem Auffangbehälter 2 positioniert. Im Inneren des Saugkopfs 3 ist eine Turbine 4 positioniert, mit der ein Unterdruck und folglich ein Luftstrom LS1 erzeugt werden kann. Der in der Figur 1 mit den gestrichelten Pfeilen angedeutet Luftstrom LS1 strömt in Strömungsrichtung R durch ein Einlassrohr 11, den Auffangbehälter 2, ein Filterelement 6 und zu der Turbine 4. Anschließend strömt der Luftstrom LS1 wieder aus dem Saugkopf 3 heraus. Das Gehäuse des Saugkopfs 3 enthält hierzu Ausströmungsöffnungen. Die Ausströmungsöffnungen sind in den Figuren nicht dargestellt.

Der Saugkopf 3 enthält des Weiteren eine Filterelementreinigungseinrichtung 7, die zum automatischen Reinigen des Filterelements 6 dient. Mit Hilfe der Filterelementreinigungseinrichtung 7 ist es im Wesentlichen möglich, einen Luftstrom LS2 in Form eines oder mehrerer Luftstöße von der Turbine 4 so auf das Filterelement 6 zu richten, dass (wie in Figur 2 angedeutet) die in dem Filterelement 6 angesammelten Schmutzpartikel SP in Pfeilrichtung M in den Auffangbehälter 2 fallen und dort aufbewahrt werden. Der von der Turbine 4 erzeugte Luftstrom LS1 zum Aufsaugen von Schmutzpartikeln SP ist während des Abreinigungsvorgangs mit der Filterelementreinigungseinrichtung 7 kurzzeitig unterbrochen.

Das Filterelement 6 dient zum Herausfiltern bzw. Zurückhalten von Schmutzpartikeln SP, die sich in einem durch das Filterelement 6 hindurchströmenden Luftstrom LS1 befinden.

Wie bereits vorstehend erwähnt enthält der Saugkopf 3 eine Turbine 4 zum Erzeugen eines Unterdrucks. Mit Hilfe des Unterdrucks kann Umgebungsluft von außerhalb der Staubsaugvorrichtung 1 in das Innere der Staubsaugvorrichtung 1 angesaugt werden. Die Turbine 4 ist über ein Zuleitungsrohr 8 mit einer Aufnahmeeinrichtung 9 für das Filterelement 6 verbunden. Die Aufnahmeeinrichtung 9 weist im Wesentlichen die Form und das Außenvolumen des Filterelements 6 auf und dient zum Aufnehmen sowie Halten des Filterelements 6.

Des Weiteren ist das Filterelement 6 zwischen dem Saugkopf 3 und dem Auffangbehälter 2 positioniert. Eine Trennebene 10 mit einer Dichtung verläuft zwischen dem Saugkopf 3 und dem Auffangbehälter 2.

Darüber hinaus weist der Saugkopf 3 ein Einlassrohr 11 mit einem ersten Ende 11a und zweiten Ende 11b auf. Das erste Ende 11a des Einlassrohrs 11 befindet sich außerhalb des Saugkopfes 3 und dient zum Aufnehmen und Halten eines Staubsaugerschlauchs mit einer Düse. Der Staubsaugerschlauch und die Düse sind in den Figuren nicht dargestellt. Das zweite Ende 11b des Einlassrohrs 11 weist auf das Innere des Auffangbehälters 2. Durch das zweite Ende 11b des Einlassrohrs 11 strömt der angesaugte Luftstrom LS1 in das Innere des Auffangbehälters 2.

Der Auffangbehälter 2 enthält im Wesentlichen eine umlaufende Wandfläche 12 und einen Boden 13. Unter dem Boden 13 sind Rollen 5 für die Mobilität der Staubsaugvorrichtung 1 vorgesehen. Die umlaufende Wandfläche 12 und der Boden 13 bilden einen Hohlraum. Der Hohlraum des Auffangbehälters 2 dient zum Auffangen und Halten von Schmutzpartikeln SP, die mit Hilfe des angesaugten Luftstroms LS1 aufgesammelt werden.

Darüber hinaus enthält der Saugkopf 3 eine Steuereinrichtung 14 sowie einen ersten Drucksensor 15 und einen zweiten Drucksensor 16. Der erste und zweite Drucksensor 15, 16 kann auch als Luftdrucksensor bezeichnet werden. Wie in den Figuren 1 und 2 angedeutet, ist der erste Drucksensor 15 an einem ersten Ende 6a des Filterelements 6 positioniert. Der zweite Drucksensor 16 ist an einem zweiten Ende 6b des Filterelements 6 positioniert. Das erste Ende 6a des Filterelements 6 entspricht dabei dem Einlassende des Filterelements 6 und das zweite Ende 6b entspricht dem Auslassende des Filterelements 6. Der angesaugte Luftstrom LS1 tritt dabei durch das Einlassende in das Filterelement 6 hinein und durch das Auslassende wieder aus dem Filterelement 6 hinaus. Der erste Drucksensor 15 dient zum Bestimmen eines ersten Druckwertes in Strömungsrichtung R vor dem Filterelement 6 bzw. an dem ersten Ende 6a des Filterelements 6. Der zweite Drucksensor 16 dient hingegen zum Bestimmen eines zweiten Druckwertes in Strömungsrichtung R hinter dem Filterelement 6 bzw. an dem ersten Ende 6a des Filterelements 6. Sowohl der erste Drucksensor 15 als auch der zweite Drucksensor 16 sind entsprechend über eine erste Leitung L1 und zweite Leitung L2 mit der Steuereinrichtung 14 verbunden, wodurch der von dem ersten Drucksensor 15 erfasste erste Druckwert und der von dem zweiten Drucksensor 16 erfasste zweite Druckwert an die Steuereinrichtung 14 gesendet werden kann.

Des Weiteren ist die Steuereinrichtung 14 über eine Leitung L3 mit der Turbine 4 verbunden. Die Steuereinrichtung 14 dient zum Steuern und Regeln aller wesentlichen Vorgänge und Funktionen der Staubsaugvorrichtung 1, insbesondere des Saugkopfes 3 und der Turbine 4. Die Steuereinrichtung 14 ist außerdem mit einer Ein- und Ausgabeeinrichtung (auch MMI genannt) verbunden, mit der ein Anwender die einzelnen Funktionen der Staubsaugvorrichtung 1 bedienen kann. Die Ein- und Ausgabeeinrichtung ist in den Figuren nicht dargestellt.

Darüber hinaus enthält die Steuereinrichtung 14 einen Speicher, eine Steuer- und Regeleinheit sowie einen Rechner. Die Steuer- und Regeleinheit sowie der Rechner sind in Form eines Mikrocontrollers (auch als MCU bezeichnet) ausgestaltet. Der Speicher, die Steuer- und Regeleinheit sowie der Rechner sind in den Figuren nicht dargestellt.

Mit Hilfe der Steuereinrichtung 14 werden die von dem ersten und zweiten Drucksensor 15, 16 empfangenen Druckwerte speichert und verarbeitet. In dem Speicher der Steuereinrichtung 14 sind insbesondere vorbestimmte Schwellwerte als Referenzwerte gespeichert.

### Verlauf des Saugvorgangs:

Zum Betreiben der Staubsaugvorrichtung 1 wird mit Hilfe der Ein- und Ausgabeeinrichtung die Staubsaugvorrichtung 1 von einem Deaktivierungsmodus in einen Aktivierungsmodus geschaltet. In dem Deaktivierungsmodus wird kein Luftstrom LS1 in die Staubsaugvorrichtung 1 angesaugt. In dem Aktivierungsmodus wird hingegen ein Luftstrom LS1 in die Staubsaugvorrichtung 1 angesaugt.

Zu Beginn des Staubsaugvorgangs ist das Filterelement 6 neuwertig und ohne Verschmutzung. Es ist jedoch auch möglich, dass das Filterelement 6 bereits gewisse Verschmutzungen durch einen vorangegangenen Staubsaugvorgang aufweist.

Zum Ansaugen eines Luftstroms LS1 erzeugt die Turbine 4 einen Unterdruck. Durch den Unterdruck strömt ein Luftstrom LS1 durch das Einlassrohr 11 in das Innere des Auffangbehälters 2. Mit dem Luftstrom LS1 werden Schmutzpartikel SP angenommen und in das Innere der Staubsaugvorrichtung 1 transportiert.

Der Luftstrom LS1 strömt durch den Auffangbehälter 2, durch erste Ende 6a in das Filterelement 6 und durch das zweite Ende 6b aus dem Filterelement 6 hinaus. In dem Filterelement 6 werden die Schmutzpartikel SP zurückgehalten bzw. sammeln sich an dem Einlassende (d.h. erstes Ende 6a) des Filterelements 6 (vgl. Figur 1).

Der erste Drucksensor 15 erfasst den Luftdruck an dem Einlassende bzw. an dem ersten Ende 6a des Filterelements 6 und sendet einen ersten Druckwert an die Steuereinrichtung 14. Der zweite Drucksensor 16 erfasst den Luftdruck an dem Auslassende bzw. dem zweiten Ende 6b des Filterelements 6 und sendet einen zweiten Druckwert an die Steuereinrichtung 14.

Mit Hilfe der Steuereinrichtung 14 wird das Verhältnis des ersten Druckwerts von dem ersten Drucksensor 15 zum zweiten Druckwert von dem zweiten Drucksensor 16 bestimmt und damit ein erster Druckreferenzwert festgelegt.

Während des Betreibens der Staubsaugvorrichtung 1 bzw. während des Saugvorgangs wird der ersten Druckwert durch den ersten Drucksensor 15 und zweite Druckwert durch den zweiten Drucksensor kontinuierlich gemessen. Es ist jedoch auch möglich, dass der der ersten und zweite Druckwert lediglich in gewissen zeitlichen Abständen gemessen wird. Diese Abstände können regelmäßig oder unregelmäßig sein und zwischen 10 und 30 Sekunden liegen.

Wenn, wie in Figur 3 gezeigt, der Wert der Druckdifferenz zwischen dem ersten und zweiten Druckwert einen ersten vorbestimmten Schwellwert erreicht hat, wird das Filterelement 6 mit Hilfe der Filterelementreinigungseinrichtung 7 gereinigt. Hierzu wird, wie vorstehend beschrieben, mit Hilfe der Turbine 4 ein Luftstrom LS2 durch das Auslassende bzw. das zweite Ende 6b des Filterelements 6 stoßweise gedrückt. Die während des Saugvorgangs in dem Filterelement 6 angesammelten Schmutzpartikel SP wird damit durch das Einlassende aus dem Filterelement 6 herausgedrückt (vgl. Figur 2). Für das Abreinigen des Filterelements durch die Filterelementreinigungseinrichtung 7 wird dabei der umgekehrte Luftstrom LS2 entweder lediglich einmal oder aber mehrere Male stoßweise durch das Filterelement in Pfeilrichtung M gedrückt. Je nach Verschmutzungsgrad des Filterelements 6 und abhängig von der gewünschten Reinigung des Filterelements 6 wird entweder einmal oder mehrere Male der Luftstrom LS2 durch das Filterelement 6 geleitet. Die Funktionsweise der Filterelementreinigungseinrichtung 7 entspricht dabei im Wesentlichen einer aus dem Stand der Technik bekannten Filterelementreinigungseinrichtung.

Nach Beendigung des Reinigens bzw. Abreinigens des Filterelements 6 wird ein zweiter Druckreferenzwert im Verhältnis von dem ersten Druckwert zu dem zweiten Druckwert bestimmt. Hierzu wird der ersten Druckwert an dem Einlassende bzw. ersten Ende 6a des Filterelements 6 mit dem zweiten Druckwert an dem Auslassende bzw. des zweiten Endes 6b des Filterelements 6 verglichen.

Anschließend wird ein Differenzwert zwischen dem zweiten Druckreferenzwert und dem ersten Druckreferenzwert bestimmt.

Wenn der Differenzwert zwischen dem zweiten Druckreferenzwert und dem ersten Druckreferenzwert einen zweiten vorbestimmten Schwellwert erreicht, wird mit Hilfe der Filterelementreinigungseinrichtung 7 das Filterelement 6 gereinigt bzw. abgereinigt.

Wenn jedoch der Differenzwert zwischen dem zweiten Druckreferenzwert und dem ersten Druckreferenzwert einen dritten vorbestimmten Schwellwert erreicht, wird der Saugvorgang nicht fortgesetzt. Die Turbine 4 und folglich die gesamte Staubsaugvorrichtung 1 werden abgeschaltet. Nach einem Austausch des Filterelements 2 kann der Staubsaugvorgang fortgesetzt werden.

In Figur 3 ist eine Grafik gezeigt, in der beispielhaft der Verlauf des erfindungsgemäßen Verfahrens zur Abreinigung des Filterelements 6 sowie insbesondere der Verlauf der Druckreferenzwerte im Verhältnis des ersten und zweiten Drucksensors 15, 16 dargestellt ist. Die Grafik stellt dabei das Verhältnis der Druckreferenzwerte Δp im Verhältnis zum Zeitverlauf t dar. Der Druckreferenzwerte Δp stellt das Verhältnis des erfassten zweiten Druckwertes von dem zweiten Drucksensor 16 zu dem erfassten ersten Druckwert von dem ersten Drucksensor 15 dar.

Der in Figur 3 gezeigte grafische Verlauf ist im Wesentlichen in acht (1 bis 8) Abschnitten unterteilt.

Mit Abschnitt 1 beginnt der Staubsaugvorgang. Das Filterelement 6 ist hierbei in einem neuen und nicht verschmutzten Zustand. In diesem Zustand kann der Luftstrom LS1 relativ leicht durch die noch freien Poren des Filterelements 6 strömen, sodass ein nur ein geringer Druckunterschied zwischen dem zweiten und ersten Druckwert besteht. Der erste Druckreferenzwert Ref. 1a für den Druckunterschied zwischen dem zweiten und ersten Druckwert ist in dem ersten Abschnitt dementsprechend gering. Wie der Grafik zu entnehmen ist, steigt der Druckunterschied zwischen dem zweiten und ersten Druckwert und damit der Druckreferenzwert (Δp) im Laufe des Staubsaugvorgangs an. Die waagerechte Linie in der Grafik beschreibt einen ersten vorbestimmten Schwellwert für den Druckreferenzwert (Δp). Wenn dieser erste Schwellwert erreicht ist, kommt es zu der vorstehend beschriebenen Abreinigung des Filterelements 6 durch die Filterelementreinigungseinrichtung 7. Nach Beendigung der Abreinigung des Filterelements 6 durch die Filterelementreinigungseinrichtung 7 liegt der neue Druckreferenzwert (Δp) bei Ref. 2a und damit etwas höher als der erste Druckreferenzwert (Δp) von Ref. 1a. Der Unterscheid zwischen Ref. 1a und Ref. 2a liegt bei 3 Einheiten. Der Grund für den erhöhten Druckreferenzwert (Δp) für Ref. 2a liegt daran, dass auch nach einer Abreinigung das Filterelements 6 nicht wieder denselben Zustand aufweist wie zu Beginn des Staubsaugvorgangs als das Filterelement 6 neu und noch nicht verschmutzt war. Der ermittelte neue Druckreferenzwert Ref. 2a ist jedoch so gering, dass der Staubsaugvorgang mit dem bestehenden Filterelement 6 vorgesetzt werden kann.

In dem Abschnitt 2 entspricht der erste Druckreferenzwert Ref. 2a. Mit dem weiteren Verlauf des Staubsaugvorgangs füllt sich das Filterelement 6 erneut mit Staub, sodass immer weniger Luft durch das Filterelement 6 strömen kann. Der Unterschied zwischen dem zweiten und dem ersten Druckwert nimmt zu. Der Wert für den Druckreferenzwert (Δp) steigt an bis erneut der erste Schwellwert erreicht wird. Das Filterelement 6 wird erneut durch die Filterelementreinigungseinrichtung 7 abgereinigt. Dieses Abreinigen des Filterelements 6 ist im Abschnitt 2 jedoch weniger effizient als im Abschnitt 1, da nach dem Ende des Abreinigen des Filterelements 6 der zweite Druckreferenzwert Ref. 3a wesentlich höher ist als der erste Druckreferenzwert Ref. 2a. Der numerische Unterscheid zwischen Ref. 3a und Ref. 2a beträgt 10 Einheiten und bedeutet, dass ein nicht ausreichendes Abreinigen des Filterelements. Der numerische Unterscheid zwischen Ref. 2a und Ref. 3a von 10 Einheiten übersteigt einen zweiten vorbestimmten Schwellwert, sodass ein erneutes Abreinigen des Filterelements 6 durch die durch die Filterelementreinigungseinrichtung 7 im Abschnitt 3 durchgeführt wird. Nach Beendigung des erneuten Abreinigens des Filterelements 6 beträgt der Unterschied des Druckreferenzwerts Ref. 3b zu dem Druckreferenzwert Ref. 3a nur 5 Einheiten. Dadurch, dass der numerische Unterscheid zwischen Ref. 3b und Ref. 3a nur noch 5 Einheiten entspricht und damit der zweite Schwellwert (= 5 Einheiten) nicht mehr überstiegen wird, ist ein ausreichendes Abreinigen des Filterelements 6 gegeben. Der Staubsaugvorgang wird mit dem etwas mehr verschmutzten Filterelement 6 fortgesetzt.

Wie die Grafik in Figur 3 zeigt, entspricht der erste Druckreferenzwert im Abschnitt 4 Ref. 3b. Mit dem weiteren Verlauf des Staubsaugvorgangs füllt sich das Filterelement 6 erneut mit Staub, sodass immer weniger Luft durch das Filterelement 6 strömen kann. Der Unterschied zwischen dem zweiten und dem ersten Druckwert, der entsprechend von dem zweiten und ersten Drucksensor 15, 16 gemessen wird, nimmt stetig zu. Der Wert für den Druckreferenzwert (Δp) steigt an bis erneut der erste Schwellwert erreicht wird. Nach dem erneuten Abreinigen des Filterelements 6 wird der neue Druckreferenzwert Ref. 4a ermittelt. Der numerische Unterscheid zwischen dem Druckreferenzwert Ref. 4a und dem ersten Druckreferenzwert Ref. 3b (zu Beginn des Abschnitts 4) beträgt erneut 5 Einheiten. Dadurch, dass der numerische Unterscheid zwischen Ref. 4a und Ref. 3b nur 5 Einheiten entspricht und damit der zweite Schwellwert (= 5 Einheiten) nicht mehr überstiegen wird, ist ein ausreichendes Abreinigen des Filterelements 6 gegeben. Der Staubsaugvorgang wird mit dem etwas mehr verschmutzten Filterelement 6 fortgesetzt.

Der erste Druckreferenzwert im Abschnitt 5 entspricht Ref. 4a. Mit dem weiteren Verlauf des Staubsaugvorgangs füllt sich das Filterelement 6 erneut mit Staub, sodass immer weniger Luft durch das Filterelement 6 strömen kann. Der Unterschied zwischen dem zweiten und dem ersten Druckwert, der entsprechend von dem zweiten und ersten Drucksensor 15, 16 gemessen wird, nimmt stetig zu. Der Wert für den Druckreferenzwert (Δp) steigt an bis erneut der erste Schwellwert erreicht wird. Nach dem erneuten Abreinigen des Filterelements 6 wird der neue Druckreferenzwert Ref. 5a ermittelt. Der numerische Unterscheid zwischen dem Druckreferenzwert Ref. 5a und dem ersten Druckreferenzwert Ref. 4a (zu Beginn des Abschnitts 5) beträgt erneut 9 Einheiten. Dadurch, dass der numerische Unterscheid zwischen Ref. 5a und Ref. 4a mehr als 5 Einheiten entspricht und damit der zweite Schwellwert (= 5 Einheiten) überstiegen wird, ist kein ausreichendes Abreinigen des Filterelements 6 gegeben.

Ein erneutes des Filterelements 6 durch die durch die Filterelementreinigungseinrichtung 7 wird im Abschnitt 6 durchgeführt. Nach diesem erneuten Abreinigen des Filterelements 6 beträgt der numerische Unterscheid zwischen Ref. 5b und Ref. 4a immer noch 8 Einheiten. Dadurch, dass der numerische Unterscheid zwischen Ref. 5b und Ref. 4a immer noch mehr als 5 Einheiten entspricht und damit der zweite Schwellwert (= 5 Einheiten) immer noch überstiegen wird, ist weiterhin kein ausreichendes Abreinigen des Filterelements 6 gegeben. Ein erneutes Abreinigen des Filterelements 6 wird daher im Abschnitt 7 durchgeführt. Am Ende des Abschnitts 7 wird ein Druckreferenzwert Ref. 5c ermittelt. Der numerische Unterscheid zwischen dem Druckreferenzwert Ref. 5c und dem Druckreferenzwert Ref. 4a beträgt 7 Einheiten und übersteigt damit weiterhin den zweiten Schwellwert (=5 Einheiten).

Da keine ausreichende Reinigung des Filterelements 6 mehr erreicht werden kann, wird am Ende des Abschnitts 8 die Staubsauvorrichtung 1 abgeschaltet. Durch ein Austauschen des nunmehr zu stark verschmutzten Filterelements 6 mit einem neuen, nicht verschmutzten Filterelement 6 kann der Staubsaugvorgang wieder begonnen werden.

### Übersicht der Bezugszeichen:

- 1: Staubsauvorrichtung
- 2: Auffangbehälter
- 3: Saugkopf
- 4: Turbine
- 5: Rollen
- 6: Filterelement
- 6a: erstes Ende des Filterelements
- 6b: zweites Ende des Filterelements
- 7: Filterelementreinigungseinrichtung
- 8: Zuleitungsrohr
- 9: Aufnahmeeinrichtung
- 10: Trennebene
- 11: Einlassrohr
- 11a: erstes Ende des Einlassrohrs
- 11b: zweites Ende des Einlassrohrs
- 12: Wandfläche der Auffangeinrichtung
- 13: Boden der Auffangeinrichtung
- 14: Steuereinrichtung
- 15: erster Drucksensor
- 16: zweiter Drucksensor
- LS1, LS2: Luftstrom
- SP: Schmutzpartikel
- L1: erste Leitung
- L2: zweite Leitung
- L3: dritte Leitung
- R: Strömungsrichtung des angesaugten Luftstroms

## Patentansprüche

1. Verfahren zum Betreiben einer Staubsaugvorrichtung (1), insbesondere eines Staubsaugers, mit einem Filterelement (6), einer Filterelementreinigungseinrichtung (7), eine Steuereinrichtung (14), eine Turbine (4) zum Ansaugen eines Luftstroms (LS) durch das Filterelement (6), einen ersten Drucksensor (15) sowie einen zweiten Drucksensor (16), wobei der erste Drucksensor (15) zum Bestimmen eines ersten Druckwertes in Strömungsrichtung (R) vor dem Filterelement (6) und der zweite Drucksensor (16) zum Bestimmen eines zweiten Druckwertes in Strömungsrichtung (R) hinter dem Filterelement (6) positioniert ist,
**gekennzeichnet durch** die Verfahrensschritte
- Betreiben der Staubsaugvorrichtung zum Ansaugen des Luftstroms (LS) durch das Filterelement (6);
- Bestimmen eines ersten Druckreferenzwertes im Verhältnis von dem ersten Druckwert zu dem zweiten Druckwert;
- Messen der Druckdifferenz zwischen dem ersten und zweiten Druckwert;
- Abreinigen des Filterelements (6) mit Hilfe der Filterelementreinigungseinrichtung (7), wenn der Wert der Druckdifferenz zwischen dem ersten und zweiten Druckwert einen ersten vorbestimmten Schwellwert erreicht;
- Bestimmen eines zweiten Druckreferenzwertes im Verhältnis von dem ersten Druckwert zu dem zweiten Druckwert nach Beendigung des Abreinigens des Filterelements (6);
- Bestimmen eines Differenzwertes zwischen dem zweiten Druckreferenzwert und dem ersten Druckreferenzwert; und
- Abreinigen des Filterelements (6) mit Hilfe der Filterelementreinigungseinrichtung (6), wenn der Differenzwert zwischen dem zweiten Druckreferenzwert und dem ersten Druckreferenzwert einen zweiten vorbestimmten Schwellwert erreicht oder Abschalten der Staubsaugvorrichtung (1), wenn der Differenzwert zwischen dem zweiten Druckreferenzwert und dem ersten Druckreferenzwert einen dritten vorbestimmten Schwellwert erreicht.

2. Staubsaugvorrichtung (1) zur Durchführung des Verfahrens nach Anspruch 1.
